# EUROPEAN PATENT APPLICATION

(11) **EP 2 306 664 A1**
(43) Date of publication of application: **06.04.2011**
(21) Application number: 09290748.4
(22) Date of filing: 30.09.2009
(51) Int. Cl.: H04J 14/02, H04Q 11/00

(54) **Method for configuring an all-optical network**

(71) Applicant: Alcatel Lucent, 75008 Paris (FR)
(72) Inventor: Dorgeuille, François, 91620 Nozay (FR); Le Sauze, Nicholas, 91620 Nozay (FR); El Khattar, Benaissa, 91620 Nozay (FR); Zami, Thierry, 91620 Nozay (FR)
(74) Representative: Croonenbroek, Thomas Jakob

(57) **Abstract**

The present invention refers to a method for configuring an all optical network as a function of traffic requests comprising the following steps:
- selecting a transparent multi-point to multi-point path comprising:
- a collection of wavelength switching nodes interconnected by a collection of optical links,
- a wavelength channel available throughout the transparent path,

- selecting a collection of traffic requests according to the wavelength channel capacity, said traffic requests corresponding to the transmission of a packet stream between two end nodes belonging to the collection of wavelength switching nodes along the transparent path,
- configuring the wavelength switching nodes to transmit and receive packet streams corresponding to the set of traffic requests.

## Description

### BACKGROUND OF THE INVENTION

The present invention relates to the field of optical networks and in particular of resources optimization in transparent light paths.

Transparent optical networks refer to optical networks wherein the transmission of signals is achieved in the optical domain from source to destination, i.e. no opto-electrical conversion is needed at the intermediate nodes in order to route signals towards their destination.

Such networks present numerous advantages but was until lately restricted to point-to-point light path.

In the case of a point to point light path, a wavelength channel is reserved from a source node to a destination node in order to establish the connection. Nevertheless, in such configuration no other connection can be established on the same wavelength channel even if the established connection requires only a portion of the wavelength channel capacity.

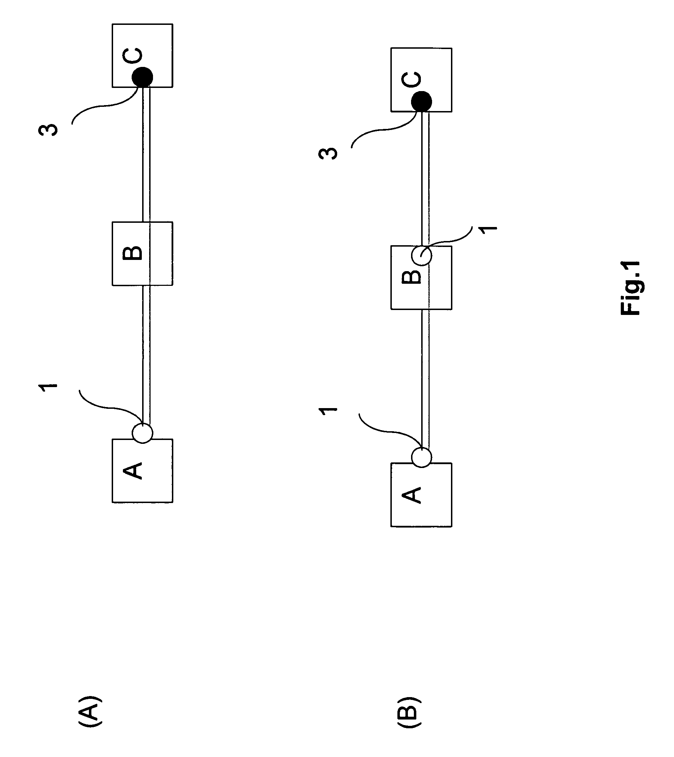

Fig.1 describes a lightpath comprising three nodes (A, B and C) and wherein three connections (C1:A→C; C2:A→B; C3:B→C) requiring respectively 40%, 20% and 20% of the wavelength channel capacity are requested. In the case of a point to point light path (case (A)), only the first connection (C1) can be set up on a single wavelength channel, from the emitter 1 of node A to the receiver 3 of node C, even if said connection does not require the entire capacity of the wavelength channel.

Thus, methods have been developed in order to provide aggregation capacities to the intermediate nodes and therefore to contribute to an improved use of the network resources.

Such methods refer to distributed aggregation (DA). With said distributed aggregation methods, multipoint to point lightpaths can be configured, which means that traffic having its end node corresponding to the lightpath destination can be added to an established connection. As a consequence, in the example of figure 1, the connection request C3 (from an emitter 1 of node B to a receiver 3 of node C) can also be treated by aggregating packets corresponding to connection C3 to the packets corresponding to connection C1 (case (B)).

However, even with the use of distributed aggregation equipments, the connection C2 can still not be treated on a common wavelength channel as C1 and C3.

### SUMMARY OF THE INVENTION

It is therefore an object of the present invention to provide a method allowing multipoint to multipoint lightpath in transparent networks.

Thus, the present invention refers to a method for traffic configuration of an optical network as a function of traffic requests comprising the following steps:
- selecting a transparent multi-point to multi-point path, said path comprising:
   - a collection of wavelength switching nodes interconnected by optical links,
   - a wavelength channel available throughout the transparent path,
- selecting a set of traffic requests according to the wavelength channel capacity, said traffic requests corresponding to the transmission of a packet stream between two end nodes which are part of the collection of wavelength switching nodes along the transparent path,
- configuring the wavelength switching nodes to transmit and receive packet streams corresponding to the set of traffic requests.

According to another aspect of the invention, the selection of a transparent multi-point to multi-point path is achieved by the selection among the unselected paths corresponding to the traffic requests of the path having the largest hop distance between its end nodes.

According to an additional aspect of the invention, the step of selecting a set of traffic requests according to the wavelength channel capacity comprises the following steps:
- selecting, among unprocessed traffic requests, requests having corresponding paths located on the selected transparent multi-point to multi-point path,
- selecting a traffic request within the selected requests having corresponding paths located on the selected transparent multi-point to multi-point path,
   if a remaining capacity of the wavelength channel between the corresponding nodes is sufficient for the selected traffic request,
   - marking the request as processed and,
   - updating the remaining capacity of the wavelength channel throughout the corresponding path as a function of the capacity consumption of the selected traffic request,
   otherwise removing the request from the initial set and putting it back with the unprocessed requests,
- repeating the previous step until no more traffic requests remain in the initial set,
- selecting the traffic requests marked as processed as the set of traffic requests.

According to a further aspect of the invention, the step of selecting a traffic request within the initial set is constrained such that path end node to path end node traffic request is selected first then from intermediate nodes to path end node requests and then from any node to intermediate node requests.

According to another aspect of the invention, the step of configuring the wavelength switching nodes to transmit and receive packet streams corresponding to the collection of traffic requests comprises, for the intermediate nodes, the step of splitting into two parts a signal received on a wavelength channel, one part being transmitted to the subsequent node of the path, the other one being processed in the node.

According to an additional aspect of the invention, the step of configuring the wavelength switching nodes to transmit and receive packet streams corresponding to the collection of traffic requests comprises, for the intermediate nodes, the steps of:
- detecting voids in the packet stream;
- determining the size of a detected void;
   if the size of the detected void is large enough,
- introducing a pending packet, needing to be transmitted, in the detected void of the packet stream.

According to a further aspect of the invention, the steps of detecting a void and determining the size of a void are achieved on the processed part of the split signal.

According to another aspect of the invention,the transmitted part of received signal is delayed in order to allow processing the other part of the signal and determining the possibility of introducing an optical packet in a detected void of the transmitted part of the signal.

According to an additional aspect of the invention, the introduction of a pending packet in a detected void of the packet stream is controlled by a carrier sense multiple access with collision avoidance (CSMA/CA) based on medium access control (MAC) protocol.

According to a further aspect of the invention, the introduction of a pending packet in a detected void of the packet stream is regulated by a TCARD algorithm in order to provide fairness in the transmission of the different nodes of the path.

The present invention also refers to an optical node comprising processing means configured for:
- receiving wavelength division multiplexing signals (WDM);
- demultiplexing said WDM signals;
- achieving spatial and reconfigurable wavelength commutation;
- transmitting optical signals;
- adding a signal on a free wavelength channel;
- multiplexing independent wavelength channels in a common WDM signal;
- amplifying and equalizing WDM signals;
   wherein it also comprises processing means configured for:
- splitting into two parts a signal corresponding to a wavelength channel;
- detecting voids in a signal received on a wavelength channel;
- introducing an optical packet in a detected void.

According to a further aspect of the invention, it also comprises means configured for receiving and transmitting optical packets in burst mode.

According to another aspect of the invention,the means configured for splitting into two parts a signal corresponding to a wavelength channel comprise an optical coupler.

According to an additional aspect of the invention,the means configured for detecting voids in a signal received on a wavelength channel comprise a photodiode.

According to a further aspect of the invention, the means configured for adding an optical packet in a detected void comprise a carrier sense multiple access with collision avoidance (CSMA/CA) based on medium access control (MAC) unit.

According to another aspect of the invention, the means configured for adding an optical packet in a detected void comprises a TCARD in order to provide fairness between the different nodes.

### BRIEF DESCRIPTION OF THE DRAWINGS

FIG.**1** is a diagram of two lightpath configurations in a portion of a network comprising three nodes; case (a) corresponding to an all-optical wavelength routed network configuration, case (b) corresponding to a distributed aggregation configuration;
FIG.**2** is a diagram of a lightpath configuration according to the present invention in the same portion of network as in Fig.1;
FIG.**3** is a synoptic diagram of the different steps of a method for configuring an all-optical network according to the present invention;
FIG.**4** is a diagram of a node architecture using carrier sense multiple access with collision avoidance (CSMA/CA);
FIG.**5** is a diagram of a node architecture according to embodiments of the present invention;
FIG.**6** is a diagram of an optical switch configuration using 2*2 switches.
FIG.**7** is a diagram of a node architecture according to embodiments of the present invention using wavelength selective switches (WSSs);

### DETAILED DESCRIPTION OF THE INVENTION

As used herein, the term "path end node" refers to a node located at an extremity of a lightpath.

As used herein, the term "intermediate node" refers to a node located in between the path end nodes;

As used herein the term "wavelength channel capacity" refers to the maximum throughput offered by the wavelength channel.

As used herein the term "hop distance" of a path refers to a coefficient taking into account the number of crossed nodes and the distance between the nodes.

As used herein, the term "void" of a packet stream refers to a free slot or a plurality of free slots in a packet stream;

As used herein, the term "multipoint to multipoint lightpath" refers to a lightpath that can be accessed in reading and writing by its intermediate nodes.

The embodiments of the present invention refer to a method and an equipment allowing transparent multipoint to multipoint lightpaths.

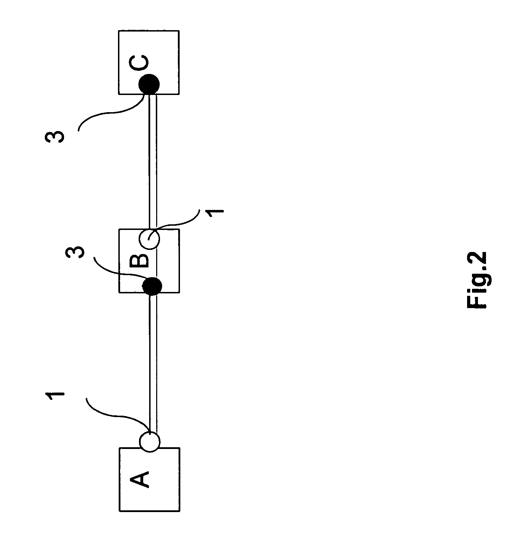

In the case of the example presented in Fig.1, such embodiments allow to satisfy the three requested connections (C1, C2 and C3) as presented in Fig.2 where connection C2 can be received on a receiver 3 of node B. It has also to be noted that in the embodiments of the present invention, the signal corresponding to connection C2 is also transmitted in the aggregated signal along the link B-C such that the three connections can be insured only if the sum of their capacity needs remains lower or equal to the corresponding wavelength channel capacity (in the present example, 40%+20%+20%=80%<100%).

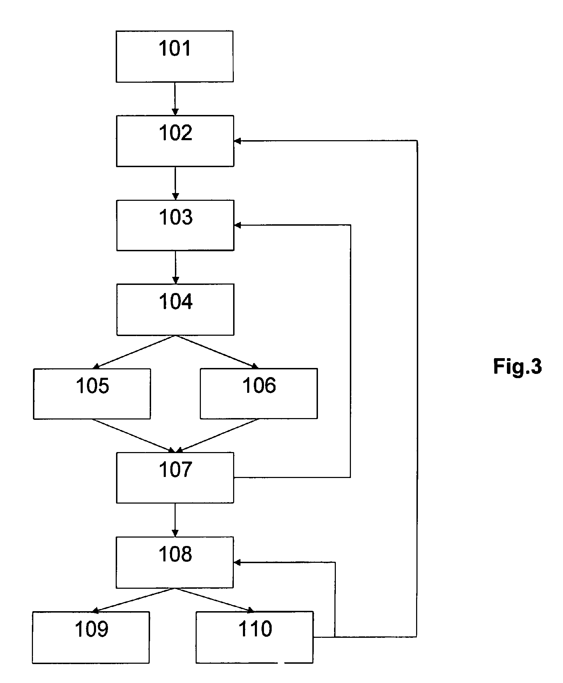

In order to implement such multipoint to multipoint lightpath model at a network scale, the connection requests have to be distributed among the different wavelength channels according to the capacity needs of said connection requests and the capacities of said wavelength channel. The different steps to achieve such distribution are presented in Fig.3.

The first step 101 1 corresponds to the selection of a transparent path.

In the example of Fig.1, this transparent path would be the path A-B-C. This path comprises three switching nodes allowing emission, reception and aggregation of signals and two transparent links (A-B and B-C). The selection of a transparent path implies that a single wavelength channel is available all along the path.

The selection of the transparent path may be arbitrary or may be constrained by the connection requests features. Thus, according to an embodiment of the present invention, the selected transparent path corresponds to the connection request corresponding to the connection having the largest hop distance.

The second step 102 consists in selecting, among the unprocessed requests, a set of connection requests having a path which corresponds to at least a portion of the transparent path selected in step 101.

The third step 103 corresponds to the selection of a connection request among the set of connection requests selected in step 102.

Such selection may be arbitrary or may be constrained by the connection requests features. For example, the connections having a path end node similar to the path end node of the transparent path of step 101 can be selected first, another or second criterion can be the hop distance of the connections.

The fourth step 104 corresponds to the determination of the possibility of establishing the connection request in function of the remaining wavelength channel capacity. If the connection is possible, the connection request is marked as processed with the corresponding wavelength channel and the remaining wavelength channel capacity is updated (step 105). Otherwise, the connection request is put back with the unprocessed requests in order to be selected in another set corresponding to a different wavelength channel (step 106). Step 107 corresponds to the determination of the presence of at least one remaining request in the set established in step 102. In this case, the methods goes back to step 103.

If there are no more connection requests in the set, the method goes to step 108 which corresponds to the determination of at least one remaining unprocessed connection request. If no more unprocessed connection requests remain, then the method goes to step 109 which corresponds to the configuration of the network and in particular the configuration of the different nodes in function of the connection planning established by the previous steps. Otherwise, the method goes to step 110 which corresponds to the determination of the existence of at least one remaining available wavelength channel along the path corresponding to the connection being processed.

If no more wavelength channel is available, a warning message is sent to inform of the impossibility of currently processing the corresponding connection request, the connection request is placed in a pending queue of waiting requests until a channel wavelength becomes available to establish the connection and the method goes back to step 108. Otherwise, the method goes back to step 102.

Furthermore, it has to be noted that the method previously described allows a dynamic reconfiguration of the network such that a new computation can be achieved in order to take into account traffic request modifications.

In the following part of the description, the different equipments and architectures allowing the multipoint to multipoint connections are described.

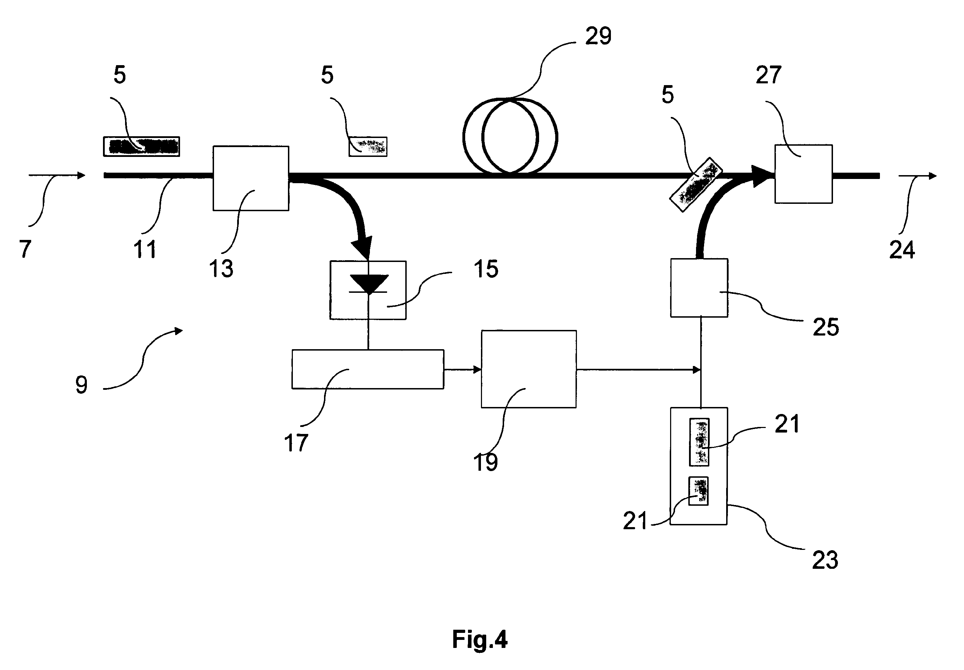

The node architecture is based on a Dual Bus Optical Ring Network (DBORN) architecture which is represented in Fig.4.

Optical packets 5 (located in frames) are received at the input 7 of the node 9 on an optical link 11(an optical fiber for example). The transmission of the optical packets 5 along said optical link 11 is also called bus.

An optical coupler 13 allows splitting the signal into two parts such that the optical packets 5 are transmitted along the optical link 11 and dropped toward a photodiode 15 at the same time.

At the output of the photodiode 15, the converted signal is processed by a void detection unit 17 in order to determine the presence and the size of free frames. Such determination is controlled by a Medium Access Control (MAC) logic unit 19. Based on the information received from the void detection unit 17, the MAC logic unit manages the transfer of the pending data packets 21, located in a buffer 23, toward an optical transmitter 25 in order to be converted in an optical packet 5 and to be aggregated to the optical bus. Such aggregation is achieved by introducing the optical packet 5 in the free space with an optical coupler 27.

In order for the equipments to have time to analyse the received signals, the transmitted part of the signal is sent to a fiber delay line (FDL) 29. The length of said fiber delay line 29 being determined in function of the time required for the equipment to transmit the Maximum Transfer Unit (MTU), to detect a void, to determine if the size of the void allows the transmission of the next data packet 21 in the buffer 23 and to convert said data packet in optical packet 5 in order to be introduced in the detected void of the bus before the output 24 of the node 9.

Such process of packet aggregation is managed by a Carrier Sense Multiple Access/Carrier Avoidance (CSMA/CA) protocol.

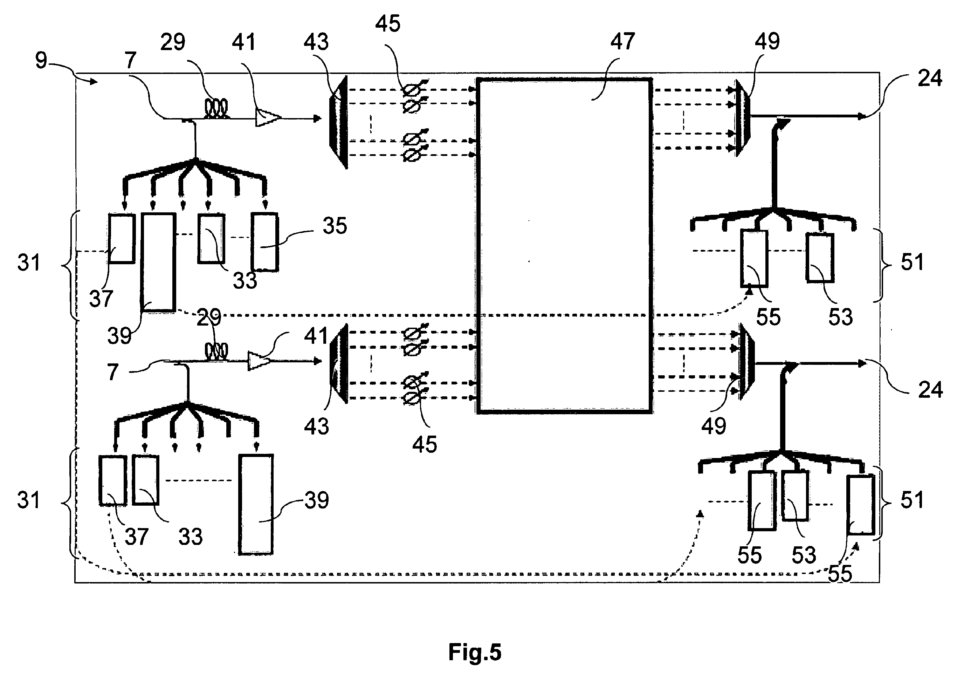

Thus, in the case of a network with a plurality of wavelength channels transmitted along an optical link (Wavelength Division Multiplexing (WDM) network), the node architecture according to the embodiments of the invention can be described by the diagram of Fig. 5.

The signal received at an input 7 of the node 9 is split into two parts, the first part is sent to receiving units 31. Different types of receiving units 31 may be implemented depending on the network transmission requirements:
- wavelength tunable receivers 33;
- wavelength tunable burst mode receivers 35;
- wavelength tunable carrier sensing units 37 capable of detecting voids and capable of transmitting said information to a transmitter;
- wavelength tunable burst mode receiver/carrier sensing combined units 39 capable of achieving the tasks of the three previously described receiving units.

Different types of receiving units 31 may be combined. For example, if no signals are transmitted from the node 9 at a given wavelength λ₁, no carrier sensing units would be necessary at this particular wavelength and only receivers 33 or burst mode receivers 35 would be tuned to this wavelength. Furthermore, the number of receiving units 31 may vary. For example, if only three wavelength are activated at a time, three receiving units may be enough (even if more wavelength channels are transmitted through the optical link 7). As a consequence, the number and type of receiving units **31** will depend on the network dimensioning.

The second part is transmitted to a fiber delay line 29 and optionally to an amplifier 41, for example an Erbium Doped Fiber Amplifier (EDFA), before being demultiplexed. The signals at the outputs of the demultiplexer 43 are transmitted to a variable optical attenuator (VOA) 45 and then to an optical switch 47 in order to be routed towards a multiplexer 49 and an output 24. Besides, different types of transmitters 51 can be implemented:
- wavelength tunable transmitters 53;
- wavelength tunable burst mode transmitters 55;

Said transmitters 51 may be linked to receiving units 31 equipped with carrier sensing and managed by a Carrier Sense Multiple Access/Carrier Avoidance (CSMA/CA) protocol. As described previously, when a void is detected on a wavelength channel, if the void is large enough with respect to the signal needed to be sent, the information is sent to the transmitter 51 in order to transmit the signal that will be added to the optical signal at the corresponding wavelength. The combination of receiving units 31 equipped with carrier sensing and transmitters 51 allows therefore the void detection and packet insertion mechanisms described with the equipment of figure 4.

Thus, such equipments allow receiving and transmitting signals on a common wavelength channel and in burst mode in order to optimize the network capacities.

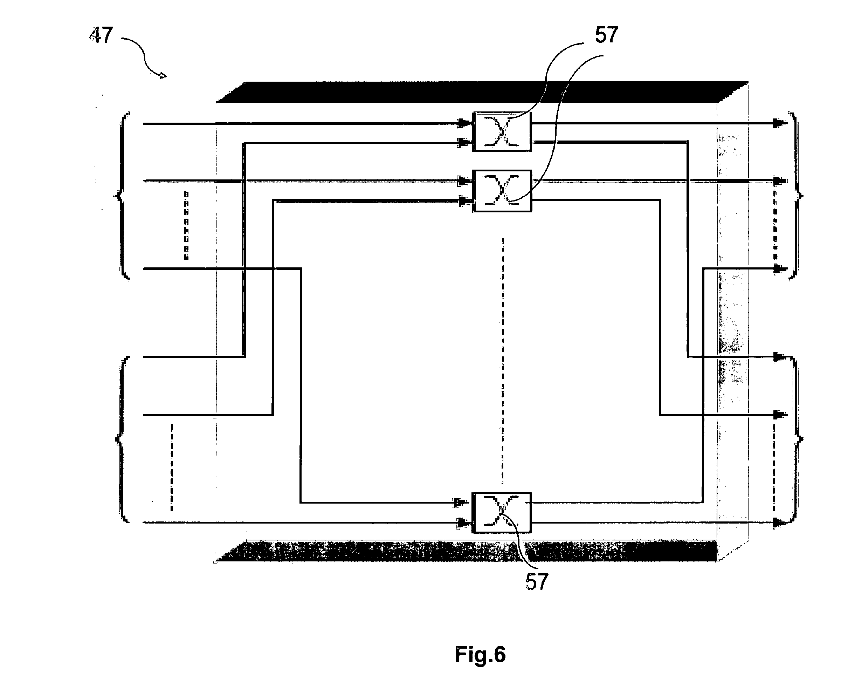

Moreover, in order to reduce the cost of the equipment, the optical switch 47 can be realized with 2*2 switches 57 as presented in Fig.6. Thus, embodiments of the present invention allow setting up multipoint to multipoint lightpaths while using only simple optical devices (such as multiplexers, demultiplexers, 2*2 optical switches,...) having a limited cost. The method previously described is therefore easy to implement.

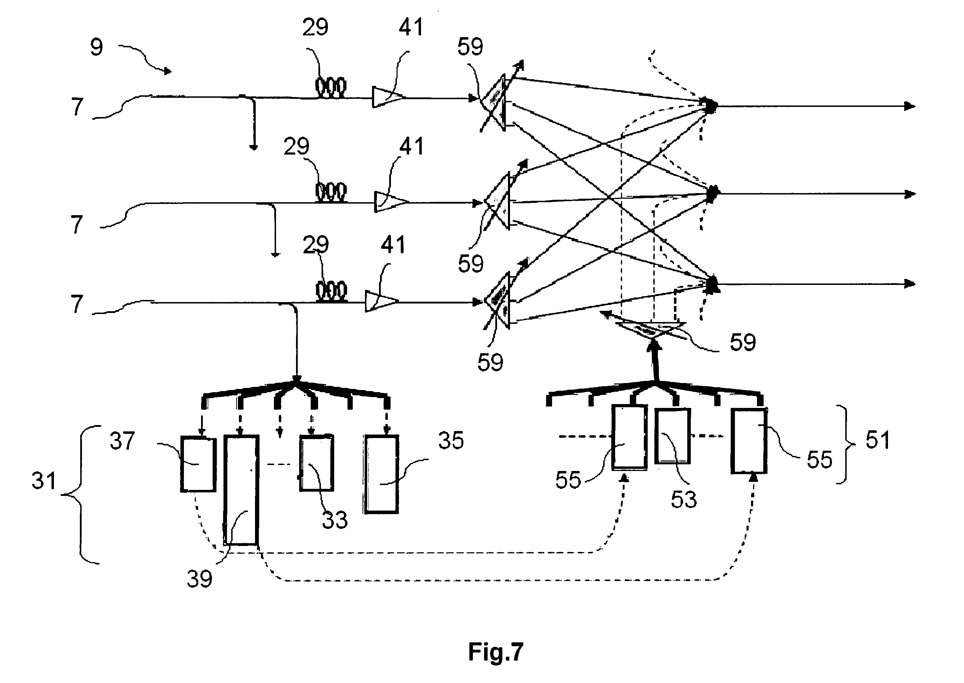

According to another embodiment of the invention, an alternate solution of node architecture using wavelength selective switches (WSSs) 59 is presented in Fig.7. The functioning remains the same as described previously with the wavelength selective switches 59 replacing the variable optical attenuators (VOAs) 45, the optical switch 47 and the multiplexers 49 /demultiplexers 43. It has to be noted in Figure 7 that the receiving units 31 and the transmitters 51 have been represented for only one of the three represented inputs 7 of the node 9.

Thus, the node architecture previously described allows the nodes to receive signals coming from preceding nodes on the bus and to transmit signal to subsequent node on the same bus by aggregating added signal in the voids of the bus leading to a multipoint to multipoint transparent lightpath.

Nevertheless, the implementation of such void detection and aggregation mechanisms may lead to an unbalanced repartition of the bus access among the different nodes along the bus path. Indeed, connections having their source node located at the beginning of the path would be favoured with respect to connections having their source node located further along the path as they would detect voids first and would therefore use said voids to send their pending packets.

In order to overcome such fairness issue, according to an embodiment of the present invention, a TCARD algorithm such as presented in the scientific paper "Resolving the fairness issue in bus-based optical access networks", IEEE J. Select Area Commun. 23(8) (2005) 1444-1457 or in the patent referenced as FR2844945B1, is used for managing the aggregation of added packets in the voids of the bus.

Thus, the embodiments of the present provide a method allowing establishing connections along multipoint to multipoint transparent lightpaths. Said method provides a solution to optimize network capacities by adapting dynamically the network configuration in function of the traffic requests. Such network configuration is based on a specific node architecture using simple equipments in order to reduce the overall cost and ease the implementation at a network scale. As a consequence, the embodiments of the present invention enhance the number of possible connections on a single wavelength channel and therefore increase the overall network traffic capacity.

## Claims

1. Method for traffic configuration of an optical network as a function of traffic requests comprising the following steps:
- selecting a transparent multi-point to multi-point path (101), said path comprising:
- a collection of wavelength switching nodes (9) interconnected by optical links (7),
- a wavelength channel available throughout the transparent path,
- selecting a set of traffic requests according to the wavelength channel capacity, said traffic requests corresponding to the transmission of a packet stream between two end nodes which are part of the collection of wavelength switching nodes along the transparent path,
- configuring the wavelength switching nodes to transmit and receive packet streams corresponding to the set of traffic requests (109).

2. Method for traffic configuration of an optical network in accordance with claim 1, wherein the selection of a transparent multi-point to multi-point path is achieved by the selection among the unselected paths corresponding to the traffic requests of the path having the largest hop distance between its end nodes.

3. Method for traffic configuration of an optical network in accordance with claim 1 or 2, wherein the step of selecting a set of traffic requests according to the wavelength channel capacity comprises the following steps:
- selecting, among unprocessed traffic requests, requests having corresponding paths located on the selected transparent multi-point to multi-point path (102),
- selecting a traffic request within the selected requests having corresponding paths located on the selected transparent multi-point to multi-point path (103),
if a remaining capacity of the wavelength channel between the corresponding nodes is sufficient for the selected traffic request,
- marking the request as processed (105) and,
- updating the remaining capacity of the wavelength channel throughout the corresponding path as a function of the capacity consumption of the selected traffic request (105),
otherwise removing the request from the initial set and putting it back with the unprocessed requests (106),
- repeating the previous step until no more traffic requests remain in the initial set,
- selecting the traffic requests marked as processed as the set of traffic requests.

4. Method for traffic configuration of an optical network in accordance with claim 3, wherein the step of selecting a traffic request within the initial set is constrained such that path end node to path end node traffic request is selected first then from intermediate nodes to path end node requests and then from any node to intermediate node requests.

5. Method for traffic configuration of an optical network in accordance with one of the previous claims, wherein the step of configuring the wavelength switching nodes to transmit and receive packet streams corresponding to the collection of traffic requests (109) comprises, for the intermediate nodes, the step of splitting into two parts a signal received on a wavelength channel, one part being transmitted to the subsequent node of the path, the other one being processed in the node.

6. Method for traffic configuration of an optical network in accordance with one of the previous claims, wherein the step of configuring the wavelength switching nodes to transmit and receive packet streams corresponding to the collection of traffic requests (109) comprises, for the intermediate nodes, the steps of:
- detecting voids in the packet stream;
- determining the size of a detected void;
if the size of the detected void is large enough,
- introducing a pending packet (21), needing to be transmitted, in the detected void of the packet stream.

7. Method for traffic configuration of an optical network in accordance with claim 5 and 6, wherein the steps of detecting a void and determining the size of a void are achieved on the processed part of the split signal.

8. Method for traffic configuration of an optical network in accordance with claim 7, wherein the transmitted part of received signal is delayed in order to allow processing the other part of the signal and determining the possibility of introducing an optical packet in a detected void of the transmitted part of the signal.

9. Method for traffic configuration of an optical network in accordance with one of the claims from 5 to 8, wherein the introduction of a pending packet in a detected void of the packet stream is controlled by a carrier sense multiple access with collision avoidance (CSMA/CA) based on medium access control (MAC) protocol.

10. Method for traffic configuration of an optical network in accordance with one of the claims from 5 to 9, wherein the introduction of a pending packet in a detected void of the packet stream is regulated by a TCARD algorithm in order to provide fairness in the transmission of the different nodes of the path.

11. Optical node comprising processing means configured for:
- receiving wavelength division multiplexing signals (WDM);
- demultiplexing said WDM signals;
- achieving spatial and reconfigurable wavelength commutation;
- transmitting optical signals;
- adding a signal on a free wavelength channel;
- multiplexing independent wavelength channels in a common WDM signal;
- amplifying and equalizing WDM signals;
wherein it also comprises processing means configured for:
- splitting into two parts a signal corresponding to a wavelength channel;
- detecting voids in a signal received on a wavelength channel;
- introducing an optical packet in a detected void.

12. Optical node in accordance with claim 11, wherein it also comprises means configured for receiving and transmitting optical packets in burst mode.

13. Optical node in accordance with claim 11 or 12, wherein the means configured for splitting into two parts a signal corresponding to a wavelength channel comprise an optical coupler.

14. Optical node in accordance with one of the claims from 11 to 13, wherein the means configured for detecting voids in a signal received on a wavelength channel comprise a photodiode.

15. Optical node in accordance with one of the claims from 11 to 14, wherein the means configured for adding an optical packet in a detected void comprise a carrier sense multiple access with collision avoidance (CSMA/CA) based on medium access control (MAC) unit.

16. Optical node in accordance with one of the claims from 11 to 15, wherein the means configured for adding an optical packet in a detected void comprises a TCARD in order to provide fairness between the different nodes.
